# EUROPEAN PATENT SPECIFICATION

(11) **EP 3 665 564 B1**
(45) Date of publication and mention of the grant of the patent: **31.01.2024**
(21) Application number: 17921348.3
(22) Date of filing: 07.08.2017
(51) Int. Cl.: G05D 1/00, G06F 3/14, B60Q 1/50, B60Q 5/00, B60Q 9/00, G06F 3/16, B60Q 1/52

(54) **AUTONOMOUS VEHICLE NOTIFICATION SYSTEM AND METHOD**
AUTONOMES FAHRZEUGBENACHRICHTIGUNGSSYSTEM UND -VERFAHREN
SYSTÈME ET PROCÉDÉ DE NOTIFICATION DE VÉHICULE AUTONOME

(43) Date of publication of application: 17.06.2020
(73) Proprietor: Nissan North America, Inc., Franklin, TN 37067 (US)
(72) Inventor: PEDERSEN, Liam, Farmington Hills, MI 48331 (US); MORTAZAVI, Ali, Farmington Hills, MI 48331 (US); LUI, Richard, Farmington Hills, MI 48331 (US); PENNA, Mauro, Della, Farmington Hills, MI 48331 (US)
(74) Representative: Grünecker Patent- und Rechtsanwälte PartG mbB
(86) International application number: PCT/US2017/045765
(87) International publication number: WO 2019/032088

(56) References cited:
- US-A1- 2013 297 140
- US-A1- 2016 003 636
- US-A1- 2017 045 885
- US-A1- 2017 136 842

## Description

### BACKGROUND

### Field of the Invention

The present invention generally relates to an autonomous vehicle notification system and method. More specifically, the present invention relates to an autonomous vehicle notification system and method for controlling a messaging system to provide a message at the autonomous vehicle pertaining to control by the remote manger that occurs based on a sensed condition external to the autonomous vehicle.

### Background Information

An autonomous vehicle can be controlled autonomously, without direct human intervention, to traverse a route of travel. An autonomous vehicle can include a control system that may generate and maintain the route of travel and may control the autonomous vehicle to traverse the route of travel. In a teleoperated system in which autonomous vehicles are operating without drivers, a remote manager can communicate with the autonomous vehicles via, for example, a network link. Thus, the remote manager can control movement of an autonomous vehicle in certain situations, such as when the autonomous vehicle is incapable of navigating through obstacles on the road. Also, even when a driver is present in an autonomous vehicle, the remote manager can control movement of the autonomous vehicle to assist the driver in certain situations, such as difficult driving conditions.

Document US 2017/0045885 A1 describes remote operation of an autonomous vehicle when driving in an unexpected driving environment. When an unexpected driving environment is detected by sensors of the vehicle, the vehicle can be remotely operated by a remote operator. In embodiments, a driver present in the vehicle can be prompted to approve the remote operation. The term "unexpected driving environment" means any driving environment or situation that is determined by a computing device of the vehicle as not being suitable for autonomous operation.

### SUMMARY

It has been discovered that in some teleoperation situations, the autonomous vehicle slows down or even stops moving while awaiting intervention by the remote manager. In this situation, a vehicle occupant may be unaware why the autonomous vehicle is slowing down or stopped. This may cause the vehicle occupant, to become uncertain as to whether the autonomous vehicle is functioning properly.

These issues are addressed by the present invention which is defined by the features of the independent claims. Further features and advantages of the present invention are the subject matter of dependent claims.

### BRIEF DESCRIPTION OF THE DRAWINGS

Referring now to the attached drawings which form a part of this original disclosure:
Figure 1 is a schematic view of an autonomous vehicle communication system in which operates an autonomous vehicle including an autonomous vehicle notification system according to a disclosed embodiment;
Figure 2 is a schematic view of an example of components of an autonomous vehicle shown in Figure 1;
Figure 3 is a schematic view of an example of a passenger compartment of the autonomous vehicle;
Figure 4 is a front driver side perspective view of the autonomous vehicle according to a comparative example including external messaging equipment issuing a message, with the front passenger side being substantially a mirror image of the front driver side;
Figure 5 is a front driver side perspective view of the autonomous vehicle according to a comparative example including external messaging equipment issuing an updated message, with the front passenger side being substantially a mirror image of the front driver side;
Figure 6 is a rear driver side perspective view of the autonomous vehicle according to a comparative example including external messaging equipment issuing a message, with the rear passenger side being substantially a mirror image of the rear driver side;
Figure 7 is a rear driver side perspective view of the autonomous vehicle according to a comparative example including external messaging equipment issuing an updated message, with the rear passenger side being substantially a mirror image of the rear driver side;
Figure 8 is a block diagram illustrating an example of components of a vehicle manager in the autonomous vehicle communication system shown in Figure 1;
Figure 9 is a flowchart showing an example of operations performed by the autonomous vehicle notification system according to a disclosed embodiment;
Figure 10 is an example of a map displayed on the display screen in the passenger compartment of the autonomous vehicle;
Figure 11 is an example of information that is displayed on the display in the passenger compartment of the autonomous vehicle and indicates that the autonomous vehicle is anticipating a problem and will be requesting assistance from a vehicle manager;
Figure 12 is an example of information that is displayed on the display in the passenger compartment of the autonomous vehicle and indicates that the autonomous vehicle has requested assistance from the vehicle manager;
Figure 13 is an example of information that is displayed on the display in the passenger compartment of the autonomous vehicle and indicates that the autonomous vehicle is stopped and waiting for assistance from the vehicle manager;
Figure 14 is an example of information that is displayed on the display in the passenger compartment of the autonomous vehicle and indicates that the vehicle manager has been requested to assist the autonomous vehicle and is attempting to resolve the problem;
Figure 15 is an example of information that is displayed on the display in the passenger compartment of the autonomous vehicle and indicates that the vehicle manager has generated a solution path for the autonomous vehicle; and
Figure 16 is an example of information that is displayed on the display in the passenger compartment of the autonomous vehicle and indicates that the autonomous vehicle has cleared the problem area and will resume operating autonomously.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

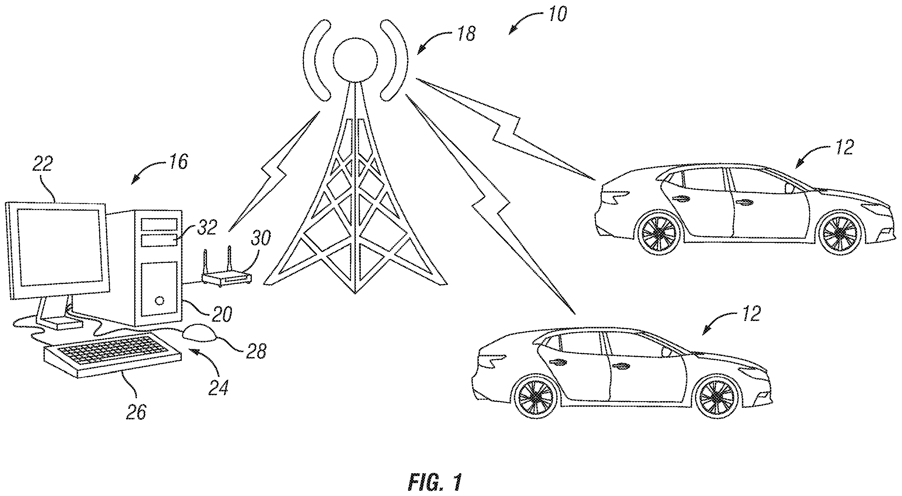

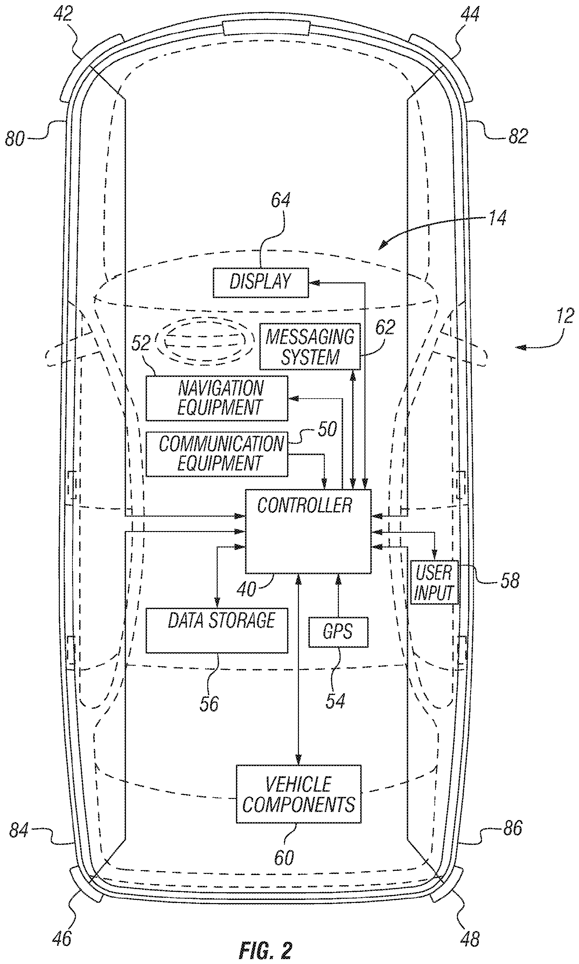

Figure 1 illustrates an example of an autonomous vehicle communication system 10. The autonomous vehicle communication system 10 is operable with a plurality of autonomous vehicles 12. Each of the autonomous vehicles 12 includes an autonomous vehicle notification system 14 according to the embodiments disclosed herein and as shown, for example, in Figure 2. The autonomous vehicle communication system 10 includes at least one vehicle manager 16 that can communicate with each other via, for example, a communication network 18 using communication links as understood in the art. A vehicle manager 16 can be a person or computer entity that is capable of acting as a remote vehicle manager to teleoperatively control an autonomous vehicle 12. A vehicle manager 16 can also be referred to as a remote manager, vehicle supervisor, tele-operator or other suitable term known in the art. The vehicle manger 16 includes or has access to, for example, a controller 20, a display 22, a user input 24 including, for example, a keyboard 26 and a mouse 28, communication equipment 30 and a data storage 32 as discussed in more detail below.

As shown in Figure 2, the autonomous vehicle notification system 14 includes a controller 40, front vehicle sensors 42 and 44, rear vehicle sensors 46 and 48, communication equipment 50, navigation equipment 52, GPS equipment 54, a data storage 56, a user input 58, vehicle components 60, a messaging system 62 and any other types of equipment typically present in an autonomous vehicle 12 as understood in the art. Although only two front vehicle sensors 42 and 44, two rear vehicle sensors 46 and 48, and a user input 58 are shown for exemplary purposes, the autonomous vehicle 12 can include any suitable number of these components.

The data storage 56 can be any suitable type of memory or storage device to which data can be stored and from which data can be retrieved. The user input 58 can be, for example, a touch panel on a display, gesture sensing equipment, mechanical or virtual buttons on the steering wheel or at any other suitable locations inside or outside the autonomous vehicle 12 as discussed herein, and so on. The user input 58 can also be a separate device, such as a smart phone, tablet computer, notebook computer or any other suitable type of device that can communicate with the controller 40 via, for example, the communication equipment 50 or in any other suitable manner.

The vehicle components 60 can include, for example, electrical and mechanical systems in the autonomous vehicle 12, such as the turn signals, windshield wipers, lights, door latches, trunk latches, tailgate latches, a vehicle entertainment system, any system or device necessary or desired for vehicle operation (autonomous or otherwise), such as the brakes and the steering control system, and any other suitable systems as understood in the art. The vehicle components 60 can also include, for example, an externally-located audiovisual link having at least one microphone, speaker, camera, RFID reader and video screen, which could also operate as a touch panel. The vehicle components 60 can include at least one PIN pad, fingerprint reader, biometric ID equipment, and facial recognition equipment that can be present at one or more locations inside or outside the autonomous vehicle 12 as understood in the art.

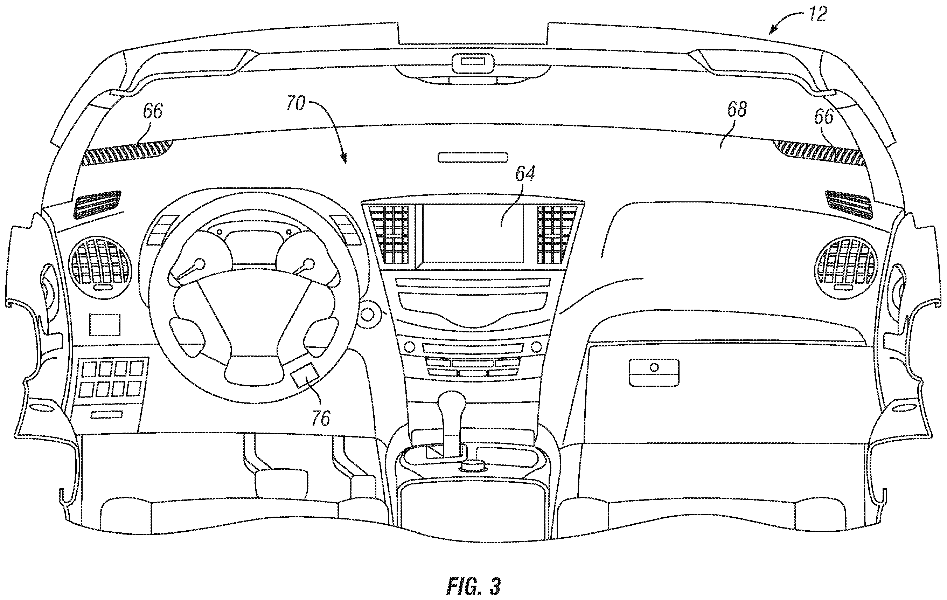

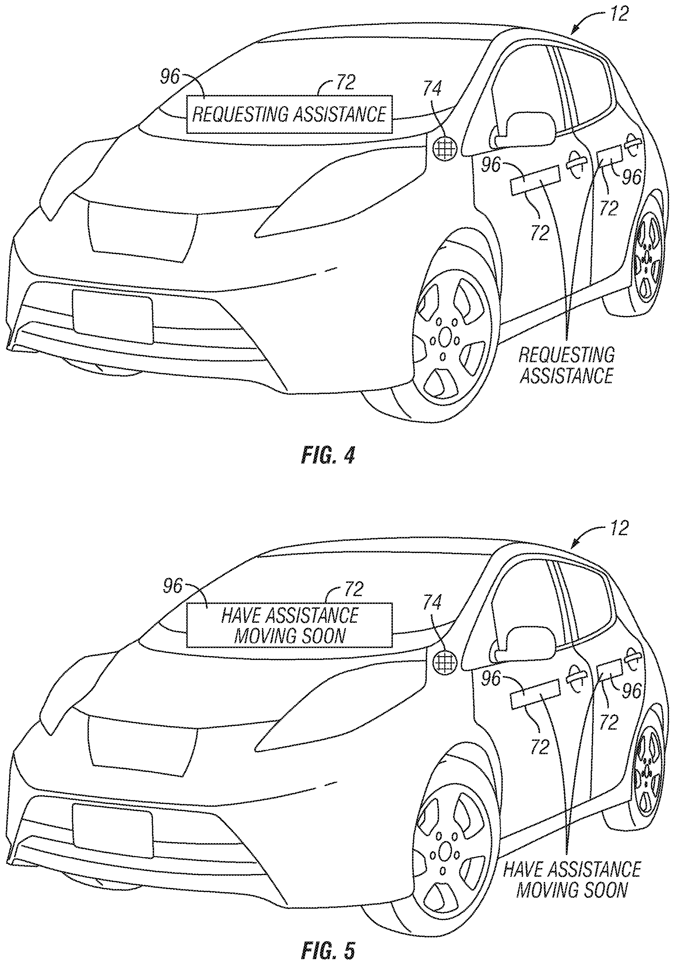

The messaging system 62 can include a plurality of displays, speakers, tactile devices and so on that can provide messages for receipt by occupants of the autonomous vehicle 12 and by people external to the autonomous vehicle 12, such as occupants of other vehicles and pedestrians. For example, the messaging system 62 can include or be operative with a display 64 and speakers 66 present on the instrument panel 68 in the passenger compartment 70 of the autonomous vehicle 12 as shown in Figure 3, to provide visual and audio information to occupants of the autonomous vehicle 12 as discussed below. The messaging system 62 can also include additional displays 72 and speakers 74, as shown in Figures 4 through 7, that can provide visual and audio information externally of the autonomous vehicle 12 as discussed below. The displays 64 and 72 can be any suitable type of display such as an LCD screen, a touch panel, a flat screen display, a heads-up display, a window display, and so on as understood in the art. Thus, the displays 72 can provide a visual display of the messages discussed herein in a forward facing external location of the autonomous vehicle 12, a transverse facing external location of the autonomous vehicle 12, and a rearward facing external location of the autonomous vehicle 12. In addition, the messaging system 62 can include tactile devices 76 that can provide tactile information to, in particular, occupants of the autonomous vehicle 12 as understood in the art. The messaging system 62 can further operate with the communication equipment 50 to send information, such as text messages, for receipt by devices, such as smartphones, notebooks, tablets and so on used by the occupants of the autonomous vehicle 12 or by people outside of the autonomous vehicle 12.

The controller 40 includes a processor, such as a microcomputer, with a control program that controls the autonomous vehicle 12 as discussed herein. The processor can be part of a microcomputer. The controller 40 can also include other conventional components such as an input interface circuit, an output interface circuit, and storage devices, such as a ROM (Read Only Memory) device and a RAM (Random Access Memory) device. The internal RAM of the controller 40 can store statuses of operational flags, various control data and so on, and the internal ROM of the controller 40 can store the control program and any information for the various operations described herein as understood in the art. The controller 40 operatively coupled to the front vehicle sensors 42 and 44, rear vehicle sensors 46 and 48, communication equipment 50, navigation equipment 52, GPS equipment 54, data storage 56, user input 58, vehicle components 60, messaging system 62 and the other types of equipment on the autonomous vehicle 12 in any suitable manner as understood in the art, and is programmed to monitor and control these components as discussed herein. The data storage 56 can also store processing results and control programs that are run by the controller 40, such as processing results and control programs for the front vehicle sensors 42 and 44, rear vehicle sensors 46 and 48, communication equipment 50, navigation equipment 52, GPS equipment 54, display 58, user input 58, vehicle components 60, messaging system 62 and any other suitable information. The data storage 56 can also store information received from another autonomous vehicle 12, a vehicle manager 16 and any other entity as discussed herein.

As understood in the art, the vehicle sensors 42, 44, 46 and 48 are configured to monitor and sense the environment surrounding the autonomous vehicle 12, and to detect objects in proximity to the autonomous vehicle 12. As illustrated in Figure 2, the vehicle sensors 42, 44, 46 and 48 can be mounted externally on front quarter panels 80 and 82, and on rear quarter panels 84 and 86 of the autonomous vehicle 12. However, the vehicle sensors 42, 44, 46 and 48 can be mounted on any suitable external portion of the autonomous vehicle 12, including the front and rear bumpers, the external mirrors or any combination of suitable areas. The vehicle sensors 42, 44, 46 and 48 communicate with the controller 40, which is then capable of using the information provided by the vehicle sensors 42, 44, 46 and 48 to control the autonomous vehicle 12 and to perform the operations discussed herein.

The vehicle sensors 42, 44, 46 and 48 can be any type of sensors desirable. For example, the front vehicle sensors 42 and 44 can include a long-range radar device for object detection in front of the autonomous vehicle 12. The front vehicle sensors 42 and 44 can be configured to detect objects at a predetermined distance (e.g., distances up to 200 m or further as desired), and can have any practical field of view angle (e.g., around 15°) as understood in the art. The front vehicle sensors 42 and 44 can also include short-range radar devices, typically having a larger field of view angle, to assist in monitoring the region in front of the autonomous vehicle 12. The rear vehicle sensors 46 and 48 can also include short-range radar devices and, if desired, long-range radar devices. In addition, the vehicle sensors vehicle sensors 42, 44, 46 and 48 can include cameras, radar sensors, photo sensors or any combination and number of these devices as understood in the art. Although the vehicle sensors 42, 44, 46 and 48 commonly include electronic detection devices that transmit electromagnetic waves (e.g., radar), the vehicle sensors 42, 44, 46 and 48 can include any suitable sensors that, for example, take computer-processed images with a digital camera and analyze the images or emit lasers, as is known in the art.

In addition, the vehicle sensors 42, 44, 46 and 48 can be configured to detect at least the speed, direction, yaw, acceleration and distance of the autonomous vehicle 12. Further, the vehicle sensors 42, 44, 46 and 48 can include other types of object-locating sensing devices including range sensors, such as FM-CW (Frequency Modulated Continuous Wave) radars, pulse and FSK (Frequency Shift Keying) radars, sonar and LIDAR (Light Detection and Ranging) devices, RFID (Radio-Frequency Identification) sensors, and ultrasonic devices which rely upon effects such as Doppler-effect measurements to locate forward objects. Object-locating devices can include charged-coupled devices (CCD) or complementary metal oxide semi-conductor (CMOS) video image sensors, and other known camera/video image processors which utilize digital photographic methods to "view" forward objects including one or more remote vehicles.

The vehicle sensors 42, 44, 46 and 48 can also monitoring oncoming traffic in front of, beside and behind the autonomous vehicle 12. The controller 40 can also use the vehicle sensors 42, 44, 46 and 48 to monitor traffic flow for maintaining lane position or performing lane departure maneuvers for the autonomous vehicle 12. The controller 40 can further determine whether the remote objects detected by the vehicle sensors 42, 44, 46 and 48 are pedestrians or remote vehicles, and the controller 14 can also determine the amount of vehicle traffic and the amount of pedestrian traffic based on the information received from the vehicle sensors 42, 44, 46 and 48.

The communication equipment 50 includes, for example, a receiver and a transmitter configured as individual components or as a transceiver, and any other type of equipment for wireless communication. For example, the communication equipment 50 is configured to communicate wirelessly over one or more communication paths. Examples of communication paths include a cellular telephone network, a wireless network (WiFi or a WiMAX), a DSRC (Dedicated Short-Range Communications) network, a power line communication network, etc. The communication equipment 50 is configured to receive information from external sources and to transmit such information to the controller 40. For example, the communication equipment 50 can communicate with a vehicle manager 16 via, for example, the communication network 18, direct communication, or in any suitable manner as understood in the art. The communication equipment 50 can also communicate with another autonomous vehicle 12, or any other suitable entity via, for example, the communication network 18, direct communication, or in any suitable manner as understood in the art. Also, the communication equipment 50 can include or interact with, for example, microphones, speakers, displays and any other types of equipment to effect the types of interaction modalities such as audio interaction, audio and visual interaction, menu interface interaction, virtual personal assistant interaction and so on.

Furthermore, the communication equipment 50 can, for example, wirelessly receive information about events scheduled in a given local area from a subscribed local knowledge source via a service provider. For instance, the communication equipment 50 can be configured to receive information from mobile applications, such as social media applications, that are connected to the autonomous vehicle 12 and to transmit such information to the controller 40. For example, the communication equipment 50 can be configured to wirelessly receive information about Facebook and/or Twitter check-ins for various locations in a given area when a mobile phone with the Facebook and/or Twitter applications is connected to the autonomous vehicle 12.

The navigation equipment 52 is configured to receive, for example, information from the controller 40 about a suggested driving route for the autonomous vehicle 12. The suggested driving route can be determined based on information received by the controller 40 from, for example, a mobile application connected to the autonomous vehicle 12, or based on a driving mode of the autonomous vehicle 12 as determined using any methods, devices or systems described herein or known in the art. The navigation equipment 52 can also be in communication with the GPS equipment 54 to determine the suggested driving route. The controller 40 can use information received from the navigation equipment 52 and the GPS equipment 54 to control driving of the autonomous vehicle 12 as understood in the art. The navigation equipment 52 can also be configured to display the suggested driving route to a driver inside the autonomous vehicle 12 on, for example, display 64 or in any other suitable manner. The navigation equipment 52 can also communicate with, for example, the vehicle manager 16 using the communication equipment 50, directly, or in any other suitable manner.

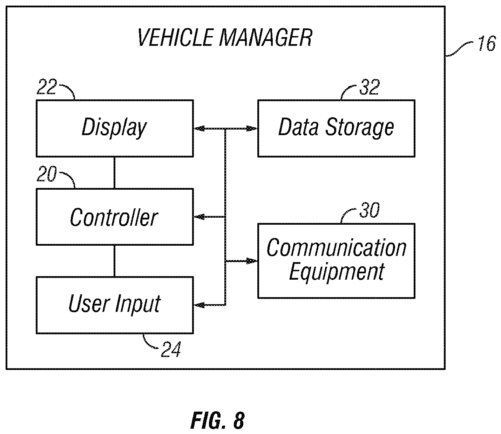

As shown in Figures 1 and 8, the vehicle manager 16 includes or has access to the controller 20, display 22, user input 24, communication equipment 30 and a data storage 32. The controller 20 includes a processor, such as a microcomputer, with a control program that controls the components of the vehicle manager 16, and controls the autonomous vehicle 12 when performing teleoperation control of the autonomous vehicle 12, as discussed herein. The processor can be part of a microcomputer. The controller 20 can also include other conventional components such as an input interface circuit, an output interface circuit, and storage devices, such as a ROM (Read Only Memory) device and a RAM (Random Access Memory) device. The internal RAM of the controller 20 can store statuses of operational flags, various control data and so on, and the internal ROM of the controller 20 can store the control program and any information for the various operations described herein as understood in the art.

The controller 20 controls the display 22 to display information pertaining to operation of the vehicle manager 16, information pertaining to the autonomous vehicle 12, and any other suitable information as understood in the art. The display 22 can be, for example, an LCD display, a touch panel, a flat screen display or any other suitable type of display as known in the art. The user input 24 can include, for example, the keyboard 26 and mouse 28 as shown in Figure 1, as well as a touch panel on the display 22, gesture sensing equipment, mechanical or virtual buttons, and so on as understood in the art. The user input 24 can also be a separate device, such as a smart phone, tablet computer, notebook computer or any other suitable type of device that can communicate with the controller 20 via, for example, the communication equipment 30 or in any other suitable manner.

The communication equipment 30 includes, for example, a receiver and a transmitter configured as individual components or as a transceiver, and any other type of equipment for wireless communication. For example, the communication equipment 30 is configured to communicate wirelessly over one or more communication paths with the communication network 16, to thus communication with autonomous vehicles 12, other vehicle managers 14, other types of content providers or service providers, and any other types of suitable entities as discussed herein. Examples of communication paths include a cellular telephone network, a wireless network (WiFi or a WiMAX), a DSRC (Dedicated Short-Range Communications) network, a power line communication network, etc. The communication equipment 30 is configured to receive information from external sources and to transmit such information to the controller 20. For example, the communication equipment 30 can communicate with an autonomous vehicle 12 via, for example, the communication network 18, direct communication, or in any suitable manner as understood in the art. The communication equipment 66 can also communicate with another vehicle manager 16 or any other suitable entity via, for example, the communication network 18, direct communication, or in any suitable manner as understood in the art. Also, the communication equipment 30 can include or interact with, for example, microphones, speakers, displays and any other types of equipment to effect the types of interaction modalities such as audio interaction, audio and visual interaction, menu interface interaction, virtual personal assistant interaction and so on.

The data storage 32 can be any suitable type of memory or storage device to which data can be stored and from which data can be retrieved. The data storage 32 can store processing results and control programs that are run by the controller 20, such as processing results and control programs for the display 22, the user input 24 and the communication equipment 30, and any other suitable information. The data storage 32 can also store information received from an autonomous vehicle 12, another vehicle manager 16 and any other entity as discussed herein.

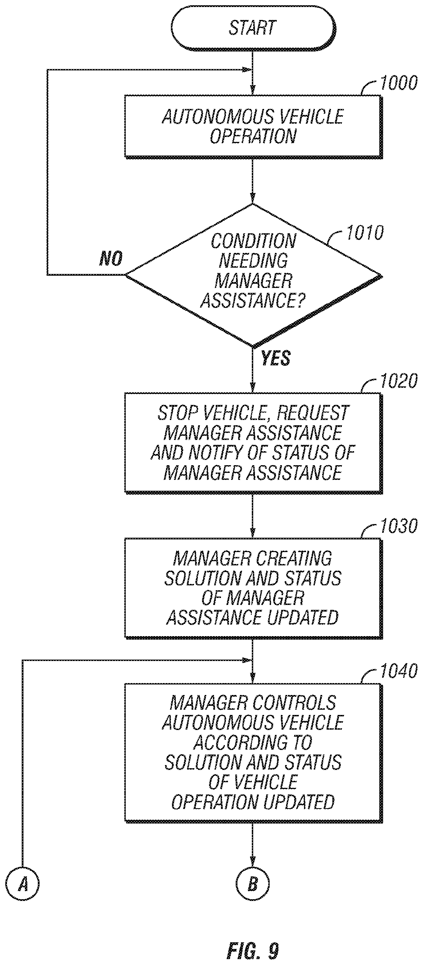

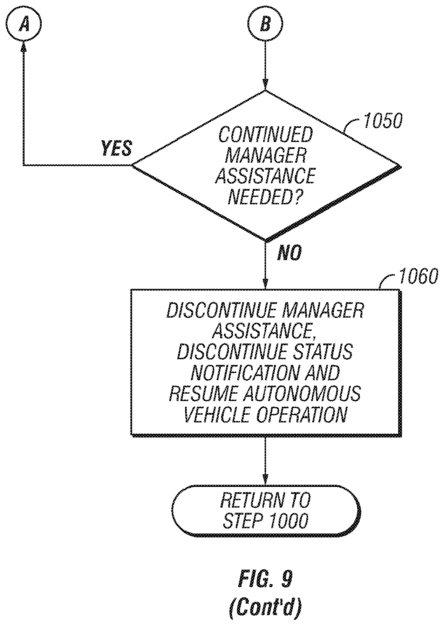

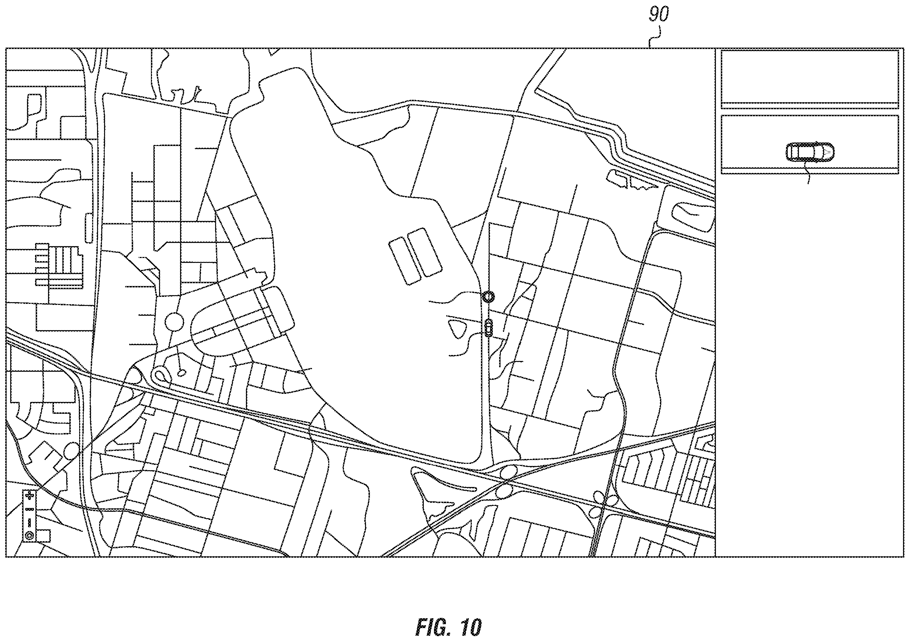

Examples of operations performed by the autonomous vehicle notification system 14 will now be described with regard to the flowchart shown in Figure 9. While the autonomous vehicle 12 is operating autonomously in Step 1000, the controller 40, for example, can control the messaging system 62 to refrain from providing any particular messages via the display and speakers in the passenger compartment, such as the display 64 and speakers 66 present on the instrument panel 68. The controller 40 at this time can also control the additional displays 72 and speakers 74 on the autonomous vehicle 12 to refrain from providing any particular messages externally of the autonomous vehicle 12. Thus, those additional displays 72 can remain in an off or darkened state, and the speakers 74 can remain in an off or silent state. The controller 40 can also control the messaging system 62 to refrain from providing any other particular messages, such as messages via tactile devices 76, messages via texts and so on. Accordingly, the controller 40 can control the display 64 on the instrument panel 68 to display a typical navigation map 90 as shown in Figure 10 based on navigation and GPS information as understood in the art. The map 90 can display the location of the autonomous vehicle 12 with respect to roads within a designated distance range of the autonomous vehicle 12, along with other landmarks such as gas stations, restaurants, places of interests and so on.

In Step 1010, the controller 40 continues to monitor the conditions external to the autonomous vehicle 12 to determine whether assistance by the vehicle manager 16 may be necessary or desirable. If assistance by the vehicle manager 16 is not necessary or desirable, the processing continues in Step 1000, and the autonomous vehicle 12 continues to operate autonomously as understood in the art.

However, if the controller 40 determines in Step 1010 that a condition external to the autonomous vehicle 12 creates a need for the vehicle manager 16 to provide assistance to the autonomous vehicle 12, the processing proceeds to Step 1020. For example, the vehicle sensors 42, 44, 46 and 48 can sense a potential trouble area T, such as construction, a traffic accident, or any other situation that may impede the ability of the autonomous vehicle 12 to travel along a usual path on the road R. In this event, the controller 40 controls the communication equipment 50 to establish communication between the autonomous vehicle 12 and the vehicle manager 16. For instance, the controller 40 can automatically request assistance from the vehicle manager 16. Thus, the vehicle manager 16 can control the autonomous vehicle 12 to travel around the trouble area T as understood in the autonomous vehicle art.

In this situation, a vehicle occupant may be unaware that the autonomous vehicle 12 is approaching a problem area P and is requesting assistance from the vehicle manager 16. Hence, the vehicle occupant may become uncertain as to whether the autonomous vehicle 12 is functioning properly. Also, people outside the autonomous vehicle 12, such as other drivers and pedestrians, may become uncertain as to why the autonomous vehicle 12 does not appear to be driving in a usual manner.

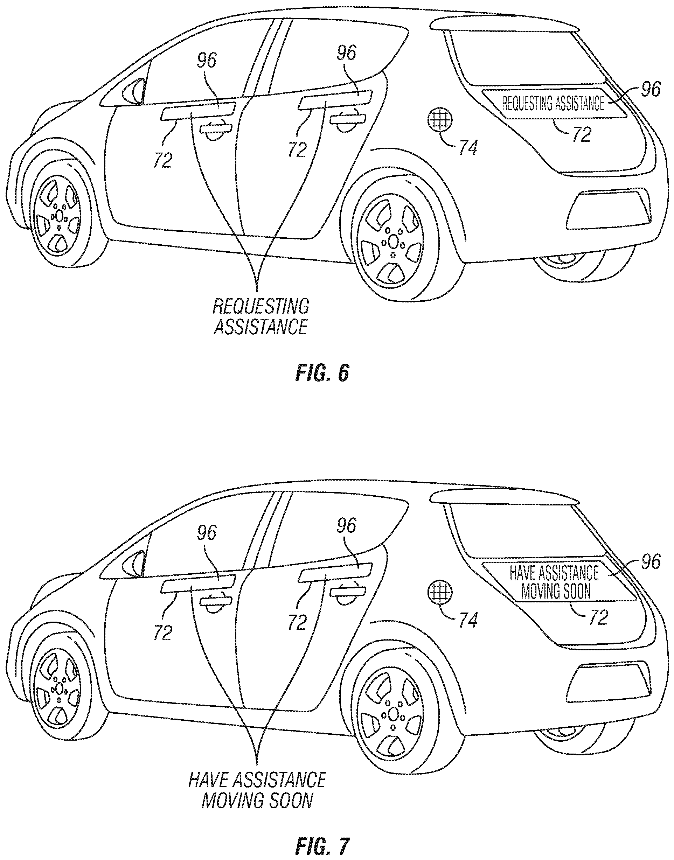

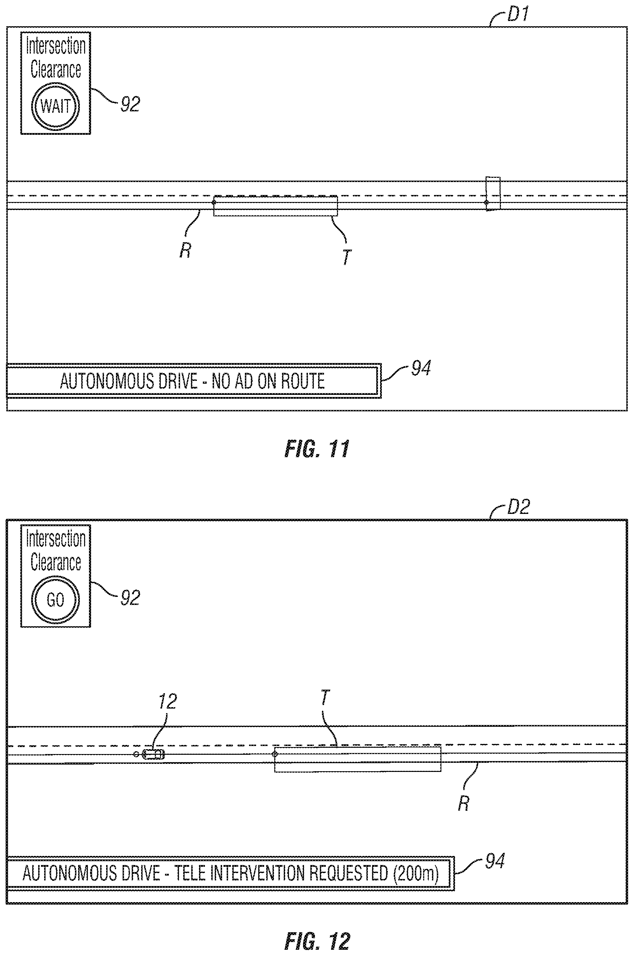

Accordingly, the controller 40 controls the messaging system 62 to provide a message at the autonomous vehicle 12 pertaining to the control by the vehicle manger 16. For example, as shown in Figure 11, the controller 40 can control the messaging system 62 to control the display 64 in the passenger compartment 70 to display a display D1 indicating the status of the autonomous vehicle 12. For instance, the display D1 can indicate that the autonomous vehicle 12 is anticipating a problem and will be requesting assistance from the vehicle manager 16. The display D1 can include a display of the road R along which the autonomous vehicle 12 is travelling, along with an indication of the trouble area T, and other informational messages 92 and 94 which provide information to occupants in the autonomous vehicle 12. Furthermore, as shown in Figures 4 and 6, the controller 40 can control the messaging system 62 to control the additional displays 72 to display informational messages 96 indicating the status of the autonomous vehicle 12, such as messages 96 indicating that the autonomous vehicle 12 will be requesting assistance from a vehicle manager 16. The controller 40 can also control the messaging system 62 to control any or all of the speakers 66 and 74, as well as any tactile devices 76, texting devices and so on, to issue suitable messages indicating the status of the autonomous vehicle 12. Since as discussed herein, the information provided by the display 64, speakers 66, tactile devices 68 and texting can be different in content from the messages provided by the additional displays 72 and speakers 74 externally of the autonomous vehicle 12, the controller 40 can thus control the messaging system 62 to provide the message including first information in the passenger compartment 70 of the autonomous vehicle 12 and second information, different from the first information, externally of the autonomous vehicle 12.

The controller 40 can further control the messaging system 62 to update the messages that are being provided to the vehicle occupants and externally of the autonomous vehicle 12 in accordance with a progression in the control of the autonomous vehicle 12 by the vehicle manager 16. For example, as shown in Figure 12, the controller 40 can control the messaging system 62 to control the display 64 in the passenger compartment 70 to display a display D2 indicating that the autonomous vehicle 12 has requested assistance from the vehicle manager 16. The display D2 can illustrate a location of the autonomous vehicle 12 in relation to the trouble area T, and can update the informational messages 92 and 94 as indicated. Likewise, the controller 40 can control the messaging system 62 to control the additional displays 72 to update the informational messages 96 indicating the status of the autonomous vehicle 12. The controller 40 can also control the messaging system 62 to control any or all of the speakers 66 and 74, as well as any tactile devices 76, texting devices and so on, to issue suitable messages updating the status of the autonomous vehicle 12.

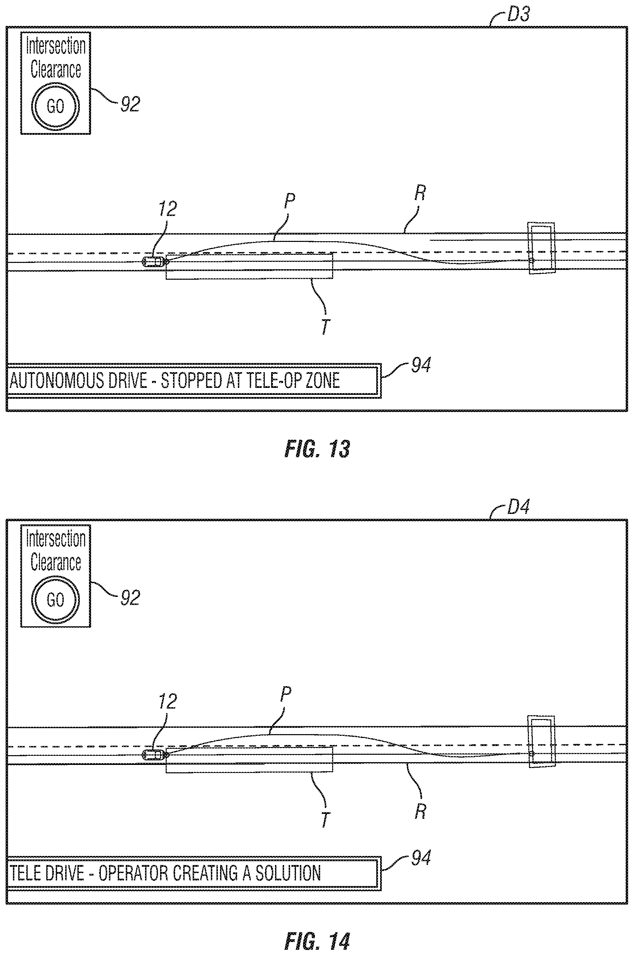

As shown in Figures 13 through 16, the controller 40 controls the messaging system 62 to continue updating the messages to update the status of the vehicle. For example, as shown in Figure 13, the controller 40 can control the messaging system 62 to control the display 64 in the passenger compartment 70 to display a display D3 indicating that the autonomous vehicle 12 has stopped proximate to the trouble area T while awaiting a solution from the vehicle manager 16. Likewise, the controller 40 can control the messaging system 62 to control the additional displays 72 to update the informational messages 96 indicating the status of the autonomous vehicle 12 as shown, for example, in Figures 5 and 7. The controller 40 can also control the messaging system 62 to control any or all of the speakers 66 and 74, as well as any tactile devices 76, texting devices and so on, to issue suitable messages updating the status of the autonomous vehicle 12.

In Step 1030, the controller 40 can continue to control the messaging system 62 to provide updated messages. For example, as shown in Figure 14, the controller 40 can control the messaging system 62 to control the display 64 in the passenger compartment 70 to display a display D4 indicating that the vehicle manager 16 has received the request for assistance and is creating a solution for the autonomous vehicle 12. Likewise, the controller 40 can control the messaging system 62 to control the additional displays 72 to update the informational messages 96 indicating the status of the autonomous vehicle 12. The controller 40 can also control the messaging system 62 to control any or all of the speakers 66 and 74, as well as any tactile devices 76, texting devices and so on, to issue suitable messages updating the status of the autonomous vehicle 12.

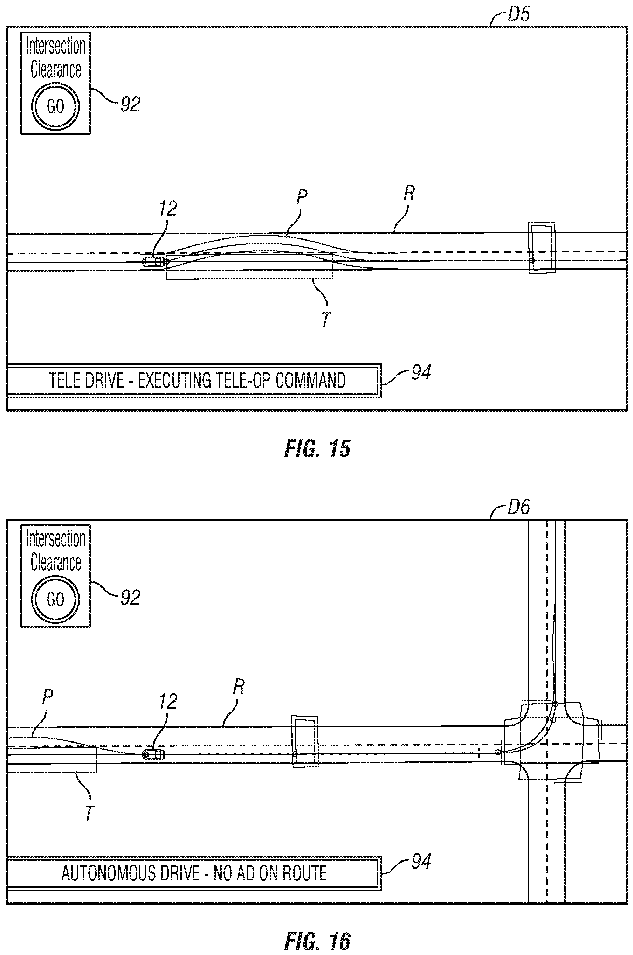

In Step 1040, the vehicle manager 16 has generated a solution and thus, the autonomous vehicle 12 is controlled by the vehicle manager 16 based on the sensed condition as discussed above. For example, as shown in Figure 15, the controller 40 can control the messaging system 62 to control the display 64 in the passenger compartment 70 to display a display D5 indicating that the vehicle manager 16 has created an alternate path P for the autonomous vehicle 12 so that the autonomous vehicle 12 can travel around the trouble area T. Likewise, the controller 40 can control the messaging system 62 to control the additional displays 72 to update the informational messages 96 indicating the status of the autonomous vehicle 12. The controller 40 can also control the messaging system 62 to control any or all of the speakers 66 and 74, as well as any tactile devices 76, texting devices and so on, to issue suitable messages updating the status of the autonomous vehicle 12. For instance, the displayed and audio messages can give a countdown indicating an estimated period of time that the autonomous vehicle 12 will resume moving.

In Step 1050, the controller 40 determines whether continued assistance by the vehicle manager 16 is needed or desired. If so, the processing continues as discussed above with regard to Step 1040. However, if assistance by the vehicle manger 16 is no longer necessary, the processing proceeds to Step 1060. As shown in Figure 16, the controller 40 can control the messaging system 62 to control the display 64 in the passenger compartment 70 to display a display D6 indicating that the autonomous vehicle 12 has passed the trouble area T. Likewise, the controller 40 can control the messaging system 62 to control the additional displays 72 to update the informational messages 96 indicating the status of the autonomous vehicle 12. For instance, the controller 40 can control the messaging system 62 to control the speakers 66 present on the instrument panel 68 to provide a message indicating that the autonomous vehicle 12 has passed the trouble area T. The controller 40 at this time can also control the additional displays 72, speakers 74, tactile devices 76, texting devices and so on to provide similar messages. The processing can then return to Step 1000, and the controller 40 can control the display 64 on the instrument panel 68 to display a typical navigation map 90 as shown in Figure 10, while controlling the messaging system 62 to refrain from providing any particular messages as discussed above.

As can be appreciated from the description herein, the autonomous vehicle notification system 14 according to the disclosed embodiments provides messages and updates to occupants of the autonomous vehicle 12 and people outside the autonomous vehicle 12, to thus let the occupants and other road users understand that when a teleoperation is occurring, the autonomous vehicle 12 will not be stopped indefinitely. This reduces the likelihood that the occupants and other road users may become frustrated and consequently attempting undesired actions such as exiting the autonomous vehicle 12, attempting to pass the autonomous vehicle 12 and so on. Hence, a more orderly traffic flow can be achieved. Furthermore, since the occupants in the autonomous vehicle 12 will be aware that the autonomous vehicle 12 is operating properly, they will be able to resume other tasks such as reading and so on, without having to be concerned about the state of the autonomous vehicle 12.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including," "having" and their derivatives. Also, the terms "part," "section," or "element" when used in the singular can have the dual meaning of a single part or a plurality of parts. Accordingly, these terms, as utilized to describe the present invention should be interpreted relative to an autonomous vehicle communication system.

The term "configured" as used herein to describe a component, section or part of a device includes hardware and/or software that is constructed and/or programmed to carry out the desired function. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such features. Thus, the foregoing descriptions of the embodiments according to the present invention are provided for illustration only, and not for the purpose of limiting the invention as defined by the appended claims and their equivalents.

## Claims

1. An autonomous vehicle notification system comprising:
a sensor (42, 44, 46, 48) suitable for being onboard the autonomous vehicle (12) and configured to sense a condition external to the autonomous vehicle (12);
a messaging system (62) suitable for being onboard the autonomous vehicle (12); and
a controller (40) configured to control communication with a remote manager (16) to enable the remote manager (16) to control the autonomous vehicle (12) based on the condition, and configured to control the messaging system (62) to provide a message at the autonomous vehicle (12) pertaining to the control by the remote manager (16),
**characterized in that**
the controller (40) is further configured to control the messaging system (62) to provide the message upon the controller (40) requesting that the remote manager (16) control the autonomous vehicle (12).

2. The autonomous vehicle notification system according to claim 1, wherein the messaging system (62) is configured to provide the message in a passenger compartment (70) of the autonomous vehicle (12).

3. The autonomous vehicle notification system according to claim 1, wherein
the messaging system (62) includes a display (64, 72); and
the controller (40) is configured to control the display (64, 72) to provide the message as a visual display.

4. The autonomous vehicle notification system according to claim 3, wherein the controller (40) is configured to update the visual display in accordance with a progression in the control of the autonomous vehicle (12) by the remote manager (16).

5. The autonomous vehicle notification system according to claim 3, wherein the display (64, 72) is configured to provide the visual display in a passenger compartment (70) of the autonomous vehicle (12).

6. The autonomous vehicle notification system according to claim 3, wherein the messaging system (62) is configured to provide a message in a passenger compartment (70) of the autonomous vehicle (12) and wherein the controller (40) is configured to control the display (64, 72) to provide the visual display including information pertaining to a location of the autonomous vehicle (12) with respect to the condition.

7. The autonomous vehicle notification system according to claim 6, wherein the controller (40) is configured to update the information pertaining to the location of the autonomous vehicle (12) with respect to the condition in accordance with a progression in the control of the autonomous vehicle (12) by the remote manager (16).

8. The autonomous vehicle notification system according to claim 1, wherein the messaging system (62) includes a speaker (66), and the controller (40) is configured to control the speaker (66) to provide the message as an audio message or the controller (40) is configured to control the messaging system (62) to provide a message as a text message.

9. The autonomous vehicle notification system according to claim 1, wherein the controller (40) is configured to update information in the message that the messaging system (62) is providing in accordance with a progression in the control of the autonomous vehicle (12) by the remote manager (16).

10. The autonomous vehicle notification system according to claim 1, wherein the controller (40) is configured to control the messaging system (62) to update the message upon the remote manager (16) beginning to control the autonomous vehicle (12).

11. An autonomous vehicle notification method comprising:
sensing (1010) a condition external to the autonomous vehicle (12);
communicating (1020), by a controller (40), with a remote manager (16) to enable the remote manager (16) to control the autonomous vehicle (12) based on the condition, and
controlling (1020), by the controller (40), a messaging system (62) to provide a message at the autonomous vehicle (12) pertaining to the control by the remote manager (16),
**characterized by**
controlling, by the controller (40), the messaging system (62) to provide the message upon the controller (40) requesting that the remote manager (16) control the autonomous vehicle (12).

## Patentansprüche

1. Benachrichtigungssystem für ein autonomes Fahrzeug, das umfasst:
einen Sensor (42, 44, 46, 48), der für interne Installation an dem autonomen Fahrzeug (12) geeignet und zum Erfassen einer Bedingung außerhalb des autonomen Fahrzeugs (12) ausgeführt ist;
ein Mitteilungssystem (62), das für interne Installation an dem autonomen Fahrzeug (12) geeignet ist; sowie
eine Steuerungseinrichtung (40), die so ausgeführt ist, dass sie Kommunikation mit einer entfernten Verwaltungseinrichtung (16) steuert, um die entfernte Verwaltungseinrichtung (16) zum Steuern des autonomen Fahrzeugs (12) auf Basis der Bedingung zu aktivieren, und die so ausgeführt ist, dass sie das Mitteilungssystem (62) zum Bereitstellen einer Mitteilung an dem autonomen Fahrzeug (12) steuert, die sich auf die Steuerung durch die entfernte Verwaltungseinrichtung (16) bezieht,
**dadurch gekennzeichnet, dass**
die Steuerungseinrichtung (40) des Weiteren so ausgeführt ist, dass sie das Mitteilungssystem (62) zum Bereitstellen einer Mitteilung steuert, wenn die Steuerungseinrichtung (40) anfordert, dass die entfernte Verwaltungseinrichtung (16) das autonome Fahrzeug (12) steuert.

2. Benachrichtigungssystem für ein autonomes Fahrzeug nach Anspruch 1, wobei das Mitteilungssystem (62) so ausgeführt ist, dass es die Mitteilung in einem Fahrgastraum (70) des autonomen Fahrzeugs (12) bereitstellt.

3. Benachrichtigungssystem für ein autonomes Fahrzeug nach Anspruch 1, wobei
das Mitteilungssystem (62) eine Anzeigeeinrichtung (64, 72) enthält; und
die Steuerungseinrichtung (40) so ausgeführt ist, dass sie die Anzeigeeinrichtung (64, 72) zum Bereitstellen der Mitteilung als eine visuelle Anzeige steuert.

4. Benachrichtigungssystem für ein autonomes Fahrzeug nach Anspruch 3, wobei die Steuerungseinrichtung (40) so ausgeführt ist, dass sie die visuelle Anzeige entsprechend einem Fortschritt bei der Steuerung des autonomen Fahrzeugs (12) durch die entfernte Verwaltungseinrichtung (16) aktualisiert.

5. Benachrichtigungssystem für ein autonomes Fahrzeug nach Anspruch 3, wobei die Anzeigeeinrichtung (64, 72) so ausgeführt ist, dass sie die visuelle Anzeige in einem Fahrgastraum (70) des autonomen Fahrzeugs (12) bereitstellt.

6. Benachrichtigungssystem für ein autonomes Fahrzeug nach Anspruch 3, wobei das Mitteilungssystem (62) so ausgeführt ist, dass es eine Mitteilung in einem Fahrgastraum (70) des autonomen Fahrzeugs (12) bereitstellt, und die Steuerungseinrichtung (40) so ausgeführt ist, dass sie die Anzeigeeinrichtung (64, 72) zum Bereitstellen der visuellen Anzeige steuert, die Informationen bezüglich eines Standortes des autonomen Fahrzeugs (12) in Bezug auf die Bedingung enthält.

7. Benachrichtigungssystem für ein autonomes Fahrzeug nach Anspruch 6, wobei die Steuerungseinrichtung (40) so ausgeführt ist, dass sie die Informationen bezüglich eines Standortes des autonomen Fahrzeugs (12) in Bezug auf die Bedingung entsprechend einem Fortschritt bei der Steuerung des autonomen Fahrzeugs (12) durch die entfernte Verwaltungseinrichtung (16) aktualisiert.

8. Benachrichtigungssystem für ein autonomes Fahrzeug nach Anspruch 1, wobei das Mitteilungssystem (62) einen Lautsprecher (66) enthält und die Steuerungseinrichtung (40) so ausgeführt ist, dass sie den Lautsprecher (66) zum Bereitstellen der Mitteilung als eine Audio-Mitteilung steuert, oder die Steuerungseinrichtung (40) so ausgeführt ist, dass sie das Mitteilungssystem (62) zum Bereitstellen einer Mitteilung als eine Text-Mitteilung steuert.

9. Benachrichtigungssystem für ein autonomes Fahrzeug nach Anspruch 1, wobei die Steuerungseinrichtung (40) so ausgeführt ist, dass sie Informationen in der Mitteilung, die das Mitteilungssystem (62) bereitstellt, entsprechend einem Fortschritt bei der Steuerung des autonomen Fahrzeugs (12) durch die entfernte Verwaltungseinrichtung (16) aktualisiert.

10. Benachrichtigungssystem für ein autonomes Fahrzeug nach Anspruch 1, wobei die Steuerungseinrichtung (40) so ausgeführt ist, dass sie das Mitteilungssystem (62) zum Aktualisieren der Mitteilung steuert, sobald die entfernte Verwaltungseinrichtung (16) beginnt, das autonome Fahrzeug (12) zu steuern.

11. Benachrichtigungsverfahren für ein autonomes Fahrzeug, das umfasst:
Erfassen (1010) einer Bedingung außerhalb des autonomen Fahrzeugs (12);
Kommunizieren (1020) mit einer entfernten Verwaltungseinrichtung (16) durch eine Steuerungseinrichtung (40), um die entfernte Verwaltungseinrichtung (16) zum Steuern des autonomen Fahrzeugs (12) auf Basis der Bedingung zu aktivieren, und
Steuern (1020) eines Mitteilungssystems (62) durch die Steuerungseinrichtung (40), zum Bereitstellen einer Mitteilung an dem autonomen Fahrzeug (12), die sich auf die Steuerung durch die entfernte Verwaltungseinrichtung (16) bezieht,
**gekennzeichnet durch**
Steuern des Mitteilungssystems (62) zum Bereitstellen der Mitteilung durch die Steuerungseinrichtung (40), sobald die Steuerungseinrichtung (40) anfordert, dass die entfernte Verwaltungseinrichtung (16) das autonome Fahrzeug (12) steuert.

## Revendications

1. Système de notification de véhicule autonome comprenant :
un capteur (42, 44, 46, 48) apte à être embarqué sur le véhicule autonome (12) et configuré pour détecter une condition extérieure au véhicule autonome (12) ;
un système de messagerie (62) apte à être embarqué sur le véhicule autonome (12) ; et
un dispositif de commande (40) configuré pour commander la communication avec un gestionnaire à distance (16) pour permettre au gestionnaire à distance (16) de commander le véhicule autonome (12) sur la base de la condition, et configuré pour commander le système de messagerie (62) pour fournir un message au niveau du véhicule autonome (12) relatif à la commande par le gestionnaire à distance (16),
**caractérisé en ce que**
le dispositif de commande (40) est en outre configuré pour commander le système de messagerie (62) pour fournir le message lorsque le dispositif de commande (40) demande que le gestionnaire à distance (16) commande le véhicule autonome (12).

2. Système de notification de véhicule autonome selon la revendication 1, dans lequel le système de messagerie (62) est configuré pour fournir le message dans un habitacle (70) du véhicule autonome (12).

3. Système de notification de véhicule autonome selon la revendication 1, dans lequel
le système de messagerie (62) comprend un afficheur (64, 72) ; et
le dispositif de commande (40) est configuré pour commander l'afficheur (64, 72) afin de fournir le message sous la forme d'un affichage visuel.

4. Système de notification de véhicule autonome selon la revendication 3, dans lequel le dispositif de commande (40) est configuré pour mettre à jour l'affichage visuel en fonction d'une progression dans la commande du véhicule autonome (12) par le gestionnaire à distance (16).

5. Système de notification de véhicule autonome selon la revendication 3, dans lequel l'afficheur (64, 72) est configuré pour fournir l'affichage visuel dans un habitacle (70) du véhicule autonome (12).

6. Système de notification de véhicule autonome selon la revendication 3, dans lequel le système de messagerie (62) est configuré pour fournir un message dans un habitacle (70) du véhicule autonome (12) et dans lequel le dispositif de commande (40) est configuré pour commander l'afficheur (64, 72) pour fournir l'affichage visuel comprenant des informations relatives à un emplacement du véhicule autonome (12) par rapport à la condition.

7. Système de notification de véhicule autonome selon la revendication 6, dans lequel le dispositif de commande (40) est configuré pour mettre à jour les informations relatives à l'emplacement du véhicule autonome (12) par rapport à la condition conformément à une progression dans la commande du véhicule autonome (12) par le gestionnaire à distance (16).

8. Système de notification de véhicule autonome selon la revendication 1, dans lequel le système de messagerie (62) comprend un haut-parleur (66), et le dispositif de commande (40) est configuré pour commander le haut-parleur (66) pour fournir le message sous forme de message audio ou le dispositif de commande (40) est configuré pour commander le système de messagerie (62) pour fournir un message sous forme d'un message textuel.

9. Système de notification de véhicule autonome selon la revendication 1, dans lequel le dispositif de commande (40) est configuré pour mettre à jour des informations dans le message que le système de messagerie (62) fournit conformément à une progression dans la commande du véhicule autonome (12) par le gestionnaire à distance (16).

10. Système de notification de véhicule autonome selon la revendication 1, dans lequel le dispositif de commande (40) est configuré pour commander le système de messagerie (62) pour mettre à jour le message lorsque le gestionnaire à distance (16) commence à commander le véhicule autonome (12).

11. Procédé de notification de véhicule autonome comprenant :
détecter (1010) une condition extérieure au véhicule autonome (12) ;
communiquer (1020), par un dispositif de commande (40), avec un gestionnaire à distance (16) pour permettre au gestionnaire à distance (16) de commander le véhicule autonome (12) sur la base de la condition, et
commander (1020), par le dispositif de commande (40), un système de messagerie (62) pour fournir un message au niveau du véhicule autonome (12) relatif à la commande par le gestionnaire à distance (16),
**caractérisé par**
commander, par le dispositif de commande (40), le système de messagerie (62) pour fournir le message lorsque le dispositif de commande (40) demande que le gestionnaire à distance (16) commande le véhicule autonome (12).
